# EUROPEAN PATENT APPLICATION

(11) **EP 4 539 185 A1**
(43) Date of publication of application: **16.04.2025**
(21) Application number: 22962448.1
(22) Date of filing: 21.10.2022
(51) Int. Cl.: H01M 10/0525, H01M 4/62, H01M 4/139

(54) **SECONDARY BATTERY, MANUFACTURING METHOD THEREFOR, AND ELECTRICAL APPARATUS**

(71) Applicant: Contemporary Amperex Technology (Hong Kong) Limited, Hong Kong (HK)
(72) Inventor: ZHUANG, Hengxu, Ningde City, Fujian 352100 (CN); WU, Yanying, Ningde City, Fujian 352100 (CN); WANG, Xinghui, Ningde City, Fujian 352100 (CN)
(74) Representative: Herrmann, Uwe
(86) International application number: PCT/CN2022/126669
(87) International publication number: WO 2024/082264

(57) **Abstract**

The present application provides a secondary battery, comprising a positive electrode plate, wherein the positive electrode plate comprising a positive electrode current collector and a positive electrode film layer arranged on at least one surface of the positive electrode current collector, the positive electrode film layer comprising a conductive agent, where the conductive agent comprises a first conductive carbon black and a second conductive carbon black, and the specific surface area of the second conductive carbon black is greater than that of the first conductive carbon black. **In** addition, the present application further provides a method for preparing the secondary battery and a power consuming device. The secondary battery of the present application not only has a low internal resistance, but also has improved battery energy density and cycling performance.

## Description

### Technical Field

The present application relates to the technical field of secondary batteries, and in particular, to a secondary battery, a preparation method therefor, and a power consuming device.

### Background Art

In recent years, secondary batteries are very widely used in energy storage systems such as wind power, fire power, hydro power, and solar power stations, and in various fields such as electric tools and electric bicycles.

A secondary battery generally comprises a positive electrode plate, a negative electrode plate, an electrolyte solution, and a separator arranged between the positive electrode plate and the negative electrode plate. In the preparation of an electrode plate, a conductive agent is usually added into the electrode plate, such that the electrode plate satisfies a certain conductivity. However, the addition of the conductive agent reduces the percentage of the active material in the electrode plate, thereby reducing the energy density.

Therefore, it is a problem to be urgently solved to develop a secondary battery which not only has a low internal resistance, but also can have high energy density and good electrical performance.

### Summary of the Invention

In view of the above problem, an object of the present application is to provide a secondary battery, which is intended to have not only a low internal resistance, but also improved battery energy density and cycling performance.

In order to achieve the above object, a first aspect of the present application provides a secondary battery, comprising a positive electrode plate, wherein the positive electrode plate comprises a positive electrode current collector and a positive electrode film layer arranged on at least one surface of the positive electrode current collector, the positive electrode film layer comprises a conductive agent, the conductive agent comprises a first conductive carbon black and a second conductive carbon black, and the specific surface area of the second conductive carbon black is greater than that of the first conductive carbon black.

Two conductive carbon blacks with different specific surface areas may be used, such that the internal resistance and cycling performance of the battery can be improved without increasing the amount of the conductive agent.

In any embodiment, the specific surface area of the first conductive carbon black is denoted as S1, the specific surface area of the second conductive carbon black is denoted as S2, S2/S1 ≥ 4, and optionally, 5 ≤ S2/S1 ≤ 17.

The ratio of the specific surface area of the first conductive carbon black to that of the second conductive carbon black set within the above range can better improve the internal resistance and cycling performance of the battery.

In any embodiment, the specific surface area of the first conductive carbon black is ≤ 140 m²/g, and optionally 50 m²/g-130 m²/g; and/or
the specific surface area of the second conductive carbon black is from 200 m²/g to 1,200 m²/g, and optionally 300 m²/g to 1,000 m²/g.

In any embodiment, the conductive agent satisfies at least one of (1) to (4):
(1) a mass percentage of the conductive agent in the positive electrode film layer is ≤ 5%, and optionally 0.8%-3.0%;
(2) a mass percentage of the first conductive carbon black in the positive electrode film layer is ≤ 4.2%, and is optionally 0.4%-3%;
(3) a mass percentage of the second conductive carbon black in the positive electrode film layer is ≤ 2.5%, and optionally 0.1% -2%; and
(4) a mass ratio of the first conductive carbon black to the second conductive carbon black is (0.4 - 8) : 1, and optionally (0.5 - 7) : 1.

In any embodiment, the first conductive carbon black has an oil absorption number of ≤ 260; and/or the second conductive carbon black has an oil absorption number of ≤ 300.

In any embodiment, the first conductive carbon black has a moisture content of ≤ 5,000 ppm; and/or the second conductive carbon black has a moisture content of ≤ 10,000 ppm.

In any embodiment, the conductive agent further comprises carbon nanotubes;
optionally, the carbon nanotubes have a tube diameter of 4-10 nm;
optionally, the carbon nanotubes have a tube length of 0.3-50 µm;
optionally, the carbon nanotubes have an aspect ratio of 50-12,500;
optionally, the carbon nanotubes comprise multiwalled carbon nanotubes;
optionally, a mass percentage of the carbon nanotubes in the positive electrode film layer is ≤ 1.2%; and
optionally, a mass ratio of the second conductive carbon black to the carbon nanotubes is (0.1-10) : 1.

In any embodiment, the first conductive carbon black and the second conductive carbon black are each independently selected from at least one of furnace black, acetylene black, Super p, and Ketjen black.

A second aspect of the present application further provides a method for preparing a secondary battery according to the first aspect of the present application, including preparing a positive electrode plate by the following steps:
S1: dry mixing a first conductive carbon, a second conductive carbon, and a first dispersant in a stirring tank to obtain a mixture powder, wherein the second conductive carbon black has a specific surface area greater than that of the first conductive carbon black;
S2: adding a solvent into the mixture powder, and uniformly mixing same to obtain a slurry 1;
S3: adding a second dispersant into the slurry 1, and uniformly mixing same to obtain a slurry 2;
S4: adding a positive electrode active material into the slurry 2, and uniformly mixing same to obtain a positive electrode material slurry; and
S5: coating the positive electrode material slurry on at least one surface of a positive electrode current collector, and drying same to form a positive electrode film layer.

In any embodiment, the first dispersant comprises a vinylidene fluoride-based polymer; and
optionally, the first dispersant comprises a vinylidene fluoride homopolymer or a first dispersant compound obtained from vinylidene fluoride and an active group-containing vinylidene fluoride copolymer, where the active group comprises at least one of carboxyl, epoxy, hydroxy, or sulfonyl, and optionally carboxyl or epoxy.

In any embodiment, the second dispersant is selected from a copolymer of ethylene and maleic anhydride or a copolymer of styrene and maleic anhydride.

In any embodiment, a ratio of the sum of a mass of the first conductive carbon black and a mass of the second conductive carbon black to a mass of the first dispersant is (0.4-2.0) : 1, and is optionally (0.75-1.8) : 1.

In any embodiment, a ratio of the sum of the mass of the first conductive carbon black and the mass of the second conductive carbon black to a mass of the second dispersant is (8-30) : 1, and is optionally (9-25) : 1.

In any embodiment, in step S3, the second dispersant and carbon nanotubes (CNT) are added into the slurry 1, and uniformly mixed to obtain the slurry 2.

In any embodiment, a content a of the first conductive carbon black, a content b of the second conductive carbon black, and a content c of the carbon nanotubes satisfy: 0.2 ≤ ((a + b) × c)/(a × b) ≤ 10, and optionally 0.4 ≤ ((a + b) × c)/(a × b) ≤ 6, wherein the a, b, and c are based on a total dry weight of the conductive slurry, respectively.

A third aspect of the present application provides a power consuming device, comprising at least one selected from a secondary battery according to the first aspect of the present application or a secondary battery prepared by the method according to the second aspect of the present application.

The power consuming device of the present application comprises the secondary battery provided by the present application, and thus has at least the same advantages as the secondary battery.

### Brief Description of the Drawings

Fig. 1 is a schematic diagram of a battery cell according to an embodiment of the present application.
Fig. 2 is an exploded view of the battery cell according to an embodiment of the present application as shown in Fig. 1.
Fig. 3 shows a schematic diagram of a battery module according to an embodiment of the present application.
Fig. 4 shows a schematic diagram of a battery pack according to an embodiment of the present application.
Fig. 5 shows an exploded view of the battery pack according to an embodiment of the present application as shown in Fig. 4.
Fig. 6 shows a schematic diagram of a power consuming device using a secondary battery according to an embodiment of the present application as a power source.

### Description of reference signs:

1 - battery pack; 2 - upper box body; 3 - lower box body; 4 - battery module; 5 - battery cell; 51 - housing; 52 - electrode assembly; 53 - top cover assembly

### Detailed Description of Embodiments

Hereinafter, embodiments of the secondary battery, the preparation method therefor, and the power consuming device of the present application are disclosed in detail appropriately with reference to the detailed description of the drawings. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are openended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

In the research process, the inventors find that the conductive slurry used in the prior art has a poor conductivity. In order to meet the requirements of an electrode plate for conductivity, it is necessary to use much conductive slurry, which reduces the percentage of an active material in a positive electrode film layer, not facilitating to the improvement of the energy density. Therefore, those skilled in the art generally will add graphene with a higher conductivity into the conductive slurry. However, graphene is expensive without cost advantages.

After a lot of researches, the inventors unexpectedly find that a positive electrode active slurry can be prepared from a first conductive carbon black and a second conductive carbon black with different specific surface areas, to effectively improve the internal resistance of a secondary battery, reduce the amount of a conductive agent, and increase the percentage of the active material, thereby improving the energy density. Further, compared with graphene, carbon black is inexpensive with cost advantages and better dispersity. In addition, the ratio of each material in the system can be further optimized to further improve the internal resistance of the secondary battery, thereby facilitating the improvement of the energy density of the corresponding secondary battery, and improving the cycling performance.

Therefore, the first aspect of the present application provides a secondary battery, comprising a positive electrode plate, wherein the positive electrode plate comprises a positive electrode current collector and a positive electrode film layer arranged on at least one surface of the positive electrode current collector, the positive electrode film layer comprises a conductive agent, the conductive agent comprises a first conductive carbon black and a second conductive carbon black, and the specific surface area of the second conductive carbon black is greater than that of the first conductive carbon black.

Two conductive carbon blacks with different specific surface areas may be used, such that the internal resistance and cycling performance of the battery can be improved without increasing the amount of the conductive agent.

In some embodiments, the specific surface area of the first conductive carbon black is denoted as S1, the specific surface area of the second conductive carbon black is denoted as S2, S2/S1 ≥ 4, and optionally, 5 ≤ S2/S1 ≤ 17.

The ratio of the specific surface area of the first conductive carbon black to that of the second conductive carbon black set within the above range can better improve the internal resistance and cycling performance of the battery.

In some embodiments, the specific surface area of the first conductive carbon black is ≤ 140 m²/g, is optionally 50 m²/g-130 m²/g, and is further optionally 55 m²/g-80 m²/g; and/or
the specific surface area of the second conductive carbon black is 200 m²/g-1,200 m²/g, is optionally 300 m²/g-1,000 m²/g, is still optionally 400 m²/g-900 m²/g, and is further optionally 500 m²/g-800 m²/g.

In some embodiments, the conductive agent satisfies at least one of (1) to (4):
(1) a mass percentage of the conductive agent in the positive electrode film layer is ≤ 5%, is optionally 0.8%-3.0%, and is further optionally 0.9% - 2.5%;
(2) a mass percentage of the first conductive carbon black in the positive electrode film layer is ≤ 4.2%, is optionally 0.4%-3%, and is further optionally 0.5% - 2.5%;
(3) a mass percentage of the second conductive carbon black in the positive electrode film layer is ≤ 2.5%, is optionally 0.1% - 2%, and is further optionally 0.4%-1%; and
(4) a mass ratio of the first conductive carbon black to the second conductive carbon black is (0.4-8) : 1, and optionally (0.5-7) : 1.

In some embodiments, the first conductive carbon black has an oil absorption number of ≤ 260; and/or the second conductive carbon black has an oil absorption number of ≤ 300.

The oil absorption number has a meaning well-known in the art, and may be measured using an instrument and method known in the art, for example, the oil absorption number may be measured using an oil absorption number tester (such as HiTEC Keithley SourceMeter) with reference to ASTM D2414 Standard Test Method for Carbon Black-Oil Absorption Number.

In some embodiments, the first conductive carbon black has a moisture content of ≤ 5,000 ppm; and/or the second conductive carbon black has a moisture content of ≤ 10,000 ppm.

The moisture content may be measured using an instrument and method known in the art, for example, may be measured using a Coulometric moisture titrator with reference to GB/T 11133-2015 Coulometric Karl Fischer titration method (e.g., 774 Test method).

In some embodiments, the conductive agent further comprises carbon nanotubes;
optionally, the tube diameter of the carbon nanotube is 4-10 nm, and further optionally 5-8 nm;
optionally, the tube length of the carbon nanotube is 0.3-50 µm, and further optionally 0.8-40 µm;
optionally, the aspect ratio of the carbon nanotube is 50-12,500, and further optionally 100-8,000;
optionally, the carbon nanotubes comprise multiwalled carbon nanotubes;
optionally, a mass percentage of the carbon nanotube in the positive electrode film layer is ≤ 1.2%, and optionally ≤ 0.6%; and
optionally, a mass ratio of the second conductive carbon black to the carbon nanotube is (0.1-10) : 1, is optionally (0.2-6) : 1, and further optionally (0.3-4) : 1.

In the present application, the tube diameter of the carbon nanotube is measured with reference to GB/T 26826-2011, and the tube length of the carbon nanotube is measured by statisticization using a scanning electron microscope.

In some embodiments, the first conductive carbon black and the second conductive carbon black are each independently selected from at least one of furnace black, acetylene black, Super p, and Ketjen black.

Optionally, the first conductive carbon black and the second conductive carbon black may be the same or different carbon blacks, optionally the same carbon black.

In some embodiments, the positive electrode film layer further comprises a dispersant, which comprises a first dispersant and a second dispersant.

In some embodiments, the first dispersant comprises a vinylidene fluoride-based polymer; and
optionally, the first dispersant comprises a vinylidene fluoride homopolymer or a first dispersant compound obtained from vinylidene fluoride and an active group-containing vinylidene fluoride copolymer, wherein the active group comprises at least one of carboxyl, epoxy, hydroxy, or sulfonyl, and optionally carboxyl or epoxy.

In some embodiments, the number-average molecular weight of the first dispersant is 100,000 to 5,000,000, and optionally 500,000 to 3,000,000.

In some embodiments, the second dispersant is selected from a copolymer of ethylene and maleic anhydride or a copolymer of styrene and maleic anhydride. Optionally, the number-average molecular weight of the second dispersant is 10,000 to 200,000, and optionally 50,000 to 150,000.

In the present application, the number-average molecular weight is determined using gel permeation chromatography (GPC) with reference to GB/T 21863-2008 Gel Permeation Chromatography (GPC)-Tetrahydrofuran as Eluent Solvent (equivalent to DIN 55672-1: 2007 Gel permeation chromatography (GPC) - Part 1: Tetrahydrofuran (THF) as elution solvent).

In the present application, the positive electrode plate comprises a positive electrode current collector and a positive electrode film layer arranged on at least one surface of the positive electrode current collector. As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In the present application, the positive electrode material is a compound capable of reversibly intercalating and de-intercalating Li⁺.

In some embodiments, the positive electrode active material can be a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or as a combination of two or more. Herein, examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}CO_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), lithium nickel cobalt aluminum oxide (e.g., LiNi_{0.85}Co_{0.15}Al_{0.05}O₂), and modified compounds thereof, etc. Examples of lithium-containing phosphates of olivine structure may include, but are not limited to, at least one of lithium iron phosphate (e.g., LiFePO₄ (also referred to as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, optionally, the positive electrode active material is a lithium-containing composite oxide of a layered structure or a spinel-like structure, such as a lithium manganese nickel composite oxide represented by LiCoO₂, LiMn₂O₄, LiNiO₂, LiNi_{1/2}Mn_{1/2}O₂, etc., a lithium manganese nickel cobalt composite oxide represented by LiNi_{1/3}Mn_{1/3}Co_{1/3}O₂, LiNi_{0.6}Mn_{0.2}Co_{0.2}O₂, etc., or a lithium-containing composite oxide such as LiNi_{1-x-y-z}CoₓAl_{y}Mg_{z}O₂ (in the formula, 0 ≤ x ≤ 1, 0 ≤ y ≤ 0.1, 0 ≤ z ≤ 0.1, and 0 ≤ 1 - x - y - z ≤ 1). In addition, the lithium-containing composite oxide with a part of constituent elements in the lithium-containing composite oxide substituted with an additive element such as Ge, Ti, Zr, Mg, Al, Mo, Sn, etc., is also included in the scope of the present application.

In addition to the positive electrode active materials, other traditional materials that may be used as positive electrode active materials of the batteries may further be used. These positive electrode active materials may be used alone or as a combination of two or more. For example, by using the lithium-containing composite oxide having a layered structure and the lithium-containing composite oxide having a spinel structure at the same time, both a large capacity and an improved safety may be achieved.

In some embodiments, the positive electrode active material comprises lithium nickel cobalt manganese oxide, lithium nickel cobalt aluminum oxide, lithium manganate, lithium cobaltate, lithium nickel cobalt oxide, lithium nickel manganese oxide, lithium iron phosphate, and lithium titanate, and a derivative or combination thereof where the various elements are replaced or doped with transition metals or a non-transition metals.

In some embodiments, a mass percentage of the positive electrode active material in the positive electrode film layer is 90% to 97.1%, and optionally 95% to 7.1%.

In some embodiments, the positive electrode film layer further optionally comprises a binder, e.g., a binder generally used in the field of batteries, such as polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, polyethylene oxide, etc.

In some embodiments, optionally, the dry weight of the binder accounts for 0.1-3.5%, optionally 0.5-2.5%, of the total weight of the positive electrode film layer.

A second aspect of the present application further provides a method for preparing a secondary battery according to the first aspect of the present application, including preparing a positive electrode plate by the following steps:
S1: dry mixing a first conductive carbon, a second conductive carbon, and a first dispersant in a stirring tank to obtain a mixture powder, wherein the second conductive carbon black has a specific surface area greater than that of the first conductive carbon black;
S2: adding a solvent into the mixture powder, and uniformly mixing same to obtain a slurry 1;
S3: adding a second dispersant into the slurry 1, and uniformly mixing same to obtain a slurry 2;
S4: adding a positive electrode active material into the slurry 2, and uniformly mixing same to obtain a positive electrode material slurry; and
S5: coating the positive electrode material slurry on at least one surface of a positive electrode current collector, and drying same to form a positive electrode film layer.

In some embodiments, the first dispersant comprises a vinylidene fluoride-based polymer; and
optionally, the first dispersant comprises a vinylidene fluoride homopolymer or a first dispersant compound obtained from vinylidene fluoride and an active group-containing vinylidene fluoride copolymer, wherein the active group comprises at least one of carboxyl, epoxy, hydroxy, or sulfonyl, and optionally carboxyl or epoxy.

In some embodiments, the second dispersant is selected from a copolymer of ethylene and maleic anhydride or a copolymer of styrene and maleic anhydride.

In some embodiments, a ratio of the sum of a mass of the first conductive carbon black and a mass of the second conductive carbon black to a mass of the first dispersant is (0.4-2.0) : 1, and is optionally (0.75-1.8) : 1.

In some embodiments, a ratio of the sum of the mass of the first conductive carbon black and the mass of the second conductive carbon black to a mass of the second dispersant is (8-30) : 1, and is optionally (9-25) : 1.

In some embodiments, in steps S1 to S4, the respective mixing may be performed by the following operation: stirring at a line speed of 5 m/s to 25 m/s, optionally 8 m/s to 20 **m/s, for** 10 to 60 min, optionally for 13 min to 40 min.

In some embodiments, the solvent is selected from at least one of N-methylpyrrolidone (NMP), N,N-dimethylacetamide, and dimethyl sulfoxide.

In some embodiments, in step S3, the second dispersant and carbon nanotubes (CNTs) are added into the slurry 1, and uniformly mixed to obtain the slurry 2.

In some embodiments, a content a of the first conductive carbon black, a content b of the second conductive carbon black, and a content c of the carbon nanotube satisfy: 0.2 ≤ ((a + b) × c)/(a × b) ≤ 10, and optionally 0.4 ≤ ((a + b) × c)/(a × b) ≤ 6, wherein the a, b, and c are based on a total dry weight of the conductive slurry, respectively.

The secondary battery of the present application will be described below by appropriately referring to the accompanying drawings. The secondary battery may be in the form of a battery cell, may be in the form of a battery module, or may be in the form of a battery pack.

An embodiment of the present application provides a battery cell.

Typically, a battery cell comprises a positive electrode plate, a negative electrode plate, an electrolyte, and a separator. During the charge/discharge of the battery, active ions are intercalated and de-intercalated back and forth between the positive electrode plate and the negative electrode plate. The electrolyte functions to conduct ions between the positive electrode plate and the negative electrode plate. The separator is arranged between the positive electrode plate and the negative electrode plate and mainly functions to prevent the positive and negative electrodes from short-circuiting while enabling ions to pass through.

### [Secondary battery]

A second aspect of the present application provides a secondary battery comprising the separator of the first aspect of the present application. Generally, the secondary battery not only comprises the separator, but also comprises a positive electrode plate, a negative electrode plate, and an electrolyte solution.

In particular, the present application may also be used in a lithium metal battery to replace a conventional separator. The negative electrode may be a lithium metal or a lithium alloy, or no negative electrode exists. The corresponding positive electrode material is as described above. In the case of a lithium metal battery free of a negative electrode, the positive electrode material needs to provide a lithium source.

The secondary battery may be prepared by a method generally used in the art, for example, the positive electrode plate, the negative electrode plate, and the separator may be prepared as an electrode assembly by a winding process or a stacking process, and then an electrolyte solution may be injected into the electrode assembly and sealed to prepare the secondary battery.

It should be noted that the secondary battery of the present application comprises a button battery. When the secondary battery is a button battery, the materials of the positive electrode plate and the negative electrode plate may be the same or different. In addition, the button battery may be prepared by a method generally used by those skilled in the art. As an example, the positive electrode plate, the separator, and the negative electrode plate may be assembled into an electrode assembly, and then an electrolyte solution is injected into the electrode assembly and sealed to prepare a button battery.

The above components of the secondary battery will be described below respectively.

### [Negative electrode plate]

A negative electrode plate comprises a negative electrode current collector and a negative electrode film layer arranged on at least one surface of the negative electrode current collector. As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver, and a silver alloy, etc.) on a polymer material substrate (e.g., polypropylene (PP), polyethylene terephthalate (PET), polybutylene terephthalate (PBT), polystyrene (PS), polyethylene (PE), etc.).

In the present application, the negative electrode material is a compound capable of intercalating and de-intercalating a lithium metal or lithium.

In some embodiments, the negative electrode active material can be a negative electrode active material known in the art for batteries. As an example, various materials such as an alloy or an oxide of aluminum, silicon, tin, etc., a carbon material, etc., may be used as the negative electrode active material. Optionally, the oxide may be titanium dioxide, etc., and the carbon material may be graphite, pyrolytic carbons, cokes, glassy carbons, a sintered body of an organic polymer compound, mesophase carbon microbeads, etc. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more.

In some embodiments, optionally, the dry weight of the negative electrode active material accounts for 75%-99%, optionally 80%-97%, of the total dry weight of the negative electrode film layer.

In some embodiments, the negative electrode film layer further optionally comprises a binder, e.g., a binder generally used in the field of batteries, such as polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, polyethylene oxide, etc.

In some embodiments, optionally, the dry weight of the binder accounts for 0.1-3.5%, optionally 0.5-2.5%, of the total dry weight of the negative electrode film layer.

In some embodiments, the negative electrode film layer may optionally comprise a conductive agent. The conductive agent may be selected from at least one of superconductive carbon, acetylene black, carbon black, Ketjen black, carbon dot, carbon nanotube, graphene, and carbon nanofiber.

In some embodiments, optionally, the dry weight of the conductive agent accounts for 0.05%-5%, optionally 0.5%-3%, of the total dry weight of the negative electrode film layer.

In some embodiments, the negative electrode film layer may optionally comprise other auxiliary agents, such as thickeners (e.g., sodium carboxymethyl cellulose (CMC-Na)), etc.

In some embodiments, the negative electrode plate can be prepared by dispersing the above-mentioned components for preparing the negative electrode plate, such as a negative electrode active material, a conductive agent, a binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application and can be selected as necessary. For example, the electrolyte may be in a liquid state, a gel state, or an all-solid state.

In some embodiments, an electrolyte solution is used as the electrolyte. The electrolyte solution comprises an electrolyte salt and a solvent.

In some embodiments, a nonaqueous solvent (an organic solvent) is used as a nonaqueous electrolyte solution. The nonaqueous solvent comprises carbonates, ethers, etc.

In some embodiments, the carbonates comprise cyclic carbonates and chain carbonates. The cyclic carbonates including ethylene carbonate, propylene carbonate, butylene carbonate, γ-butyrolactone, sulfur esters (ethylene glycol sulfide), etc., may be listed. The chain carbonates including low-viscosity polar chain carbonate compounds represented by dimethyl carbonate, diethyl carbonate, and methyl ethyl carbonate, and aliphatic branched carbonate compounds may be listed. A mixed solvent of the cyclic carbonates (particularly, ethylene carbonate) and the chain carbonates is particularly preferred.

Ethers including tetraethylene glycol dimethyl ether (TEGDME), ethylene glycol dimethyl ether (DME), 1,3-dioxolane (DOL), etc. may be listed.

In addition, not only the above non-aqueous solvents, but also chain alkyl esters such as methyl propionate, a chain phosphotriester such as trimethyl phosphate; a nitrile solvent such as 3-methoxypropionitrile; and a nonaqueous solvent (an organic solvent) such as a branched compound having an ether bond and represented by a dendritic compound may be used.

In addition, a fluorine-based solvent may also be used.

As the fluorine-based solvent, H(CF₂)₂OCH₃, C₄F₉OCH₃, H(CF₂)₂OCH₂CH₃, H(CF₂)₂OCH₂CF₃, H(CF₂)₂CH₂O(CF₂)₂H, or a (perfluoroalkyl) alkyl ether with a linear structure of CF₃CHFCF₂OCH₃, CF₃CHFCF₂OCH₂CH₃, etc., such as 2-trifluoromethylhexafluoropropyl methyl ether, 2-trifluoromethylhexafluoropropyl ethyl ether, 2-trifluoromethylhexafluoropropyl propyl ether, 3-trifluoromethyloctafluorobutyl methyl ether, 3-trifluoromethyloctafluorobutyl ethyl ether, 3-trifluoromethyloctafluorobutyl propyl ether, 4-trifluoromethyldecafluoropentyl methyl ether, 4-trifluoromethyldecafluoropentyl ethyl ether, 4-trifluoromethyldecafluoropentyl propyl ether, 5-trifluoromethyldodecafluorohexyl methyl ether, 5-trifluoromethyldodecafluorohexyl ethyl ether, 5-trifluoromethyldodecafluorohexyl ethyl ether, 6-trifluoromethyltetradecafluoroheptyl methyl ether, 6-trifluoromethyl tetradecafluoroheptyl ethyl ether, 6-trifluoromethyltetradecafluoroheptyl propyl ether, 7-trifluoromethylhexadecylfluorooctyl methyl ether, 7-trifluoromethylhexadecylfluorooctyl ethyl ether, 7-trifluoromethylhexadecylfluorooctyl propyl ether, etc., may be listed.

In addition, the above-mentioned iso(perfluoroalkyl) alkyl ether and the above-mentioned (perfluoroalkyl) alkyl ether having a linear structure may also be used in combination.

As the electrolyte salt used in the nonaqueous electrolyte solution, lithium salts such as lithium perchlorate, an organoboron lithium salt, a lithium salt of a fluorine-containing compound, a lithium imide salt, etc., are preferred.

As an example of such electrolyte salts, LiClO₄, LiPF₆, LiBF₄, LiAsF₆, LiSbF₆, LiCF₃SO₃, LiCF₃CO₂, LiC₂F₄(SO₃)₂, LiN(C₂F₅SO₂)₂, LiC(CF₃SO₂)₃, LiCₙF₂ₙ₊₁SO₃ (n ≥ 2), LiN(R_{f}OSO₂)₂ (where R_{f} is fluoroalkyl), etc., may be listed. Among these lithium salts, fluorine-containing organic lithium salts are particularly preferred. The fluorine-containing organic lithium salts are highly anionic and easily separated into ions, and therefore easily dissolved in the nonaqueous electrolyte solution.

A concentration of the electrolyte lithium salt in the nonaqueous electrolyte solution is, for example, 0.3 mol/L (mol/liter) or more, and more optionally 0.7 mol/L or more; and optionally 1.7 mol/L or less, and more optionally 1.2 mol/L or less. If the concentration of the electrolyte lithium salt is too low, the ionic conductivity is too low. If the concentration is too high, there is a concern that the electrolyte salt that cannot be completely dissolved precipitates.

In some embodiments, the electrolyte solution may optionally comprise an additive which is not particularly limited by the present application. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the battery cell further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene, and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, the battery cell may include an outer package. The outer package may be used to encapsulate the above-mentioned electrode assembly and electrolyte.

In some embodiments, the outer package of the battery cell may be a hard shell, such as a hard plastic shell, an aluminum shell, and a steel shell. The outer package of the battery cell may also be a soft bag, such as a pouch-type soft bag. The material of the soft bag may be plastics, and the examples of plastics may comprise polypropylene, polybutylene terephthalate, polybutylene succinate, etc.

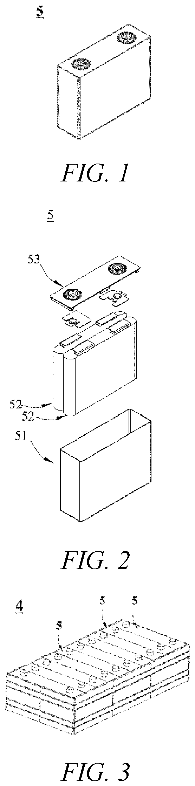

In the present application, the shape of the battery cell is not particularly limited and may be a cylindrical shape, a square shape, or any other shape. For example, Fig. 1 shows a battery cell 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assembly 52 contained in the battery cell 5 may be one or more, and can be selected by those skilled in the art according to the actual requirements.

In some embodiments, the battery cell can be assembled into a battery module, and the number of the battery cells contained in the battery module may be one or more, and the specific number can be selected by those skilled in the art according to the application and capacity of the battery module.

Fig. 3 shows a battery module 3 as an example. Referring to Fig. 3, in the battery module 4, a plurality of battery cells 5 may be arranged sequentially along a length direction of the battery module 4. Apparently, the secondary batteries may also be arranged in any other manner. Furthermore, the plurality of battery cells 5 may be fixed by fasteners.

Optionally, the battery module 4 may further comprise a housing having an accommodating space, and the plurality of battery cells 5 is accommodated in the accommodating space.

In some embodiments, the battery cells may be assembled into a battery pack. **In** some embodiments, the above battery module may also be assembled into a battery pack, the number of the battery modules contained in the battery pack may be one or more, and the specific number can be selected by those skilled in the art according to the application and capacity of the battery pack.

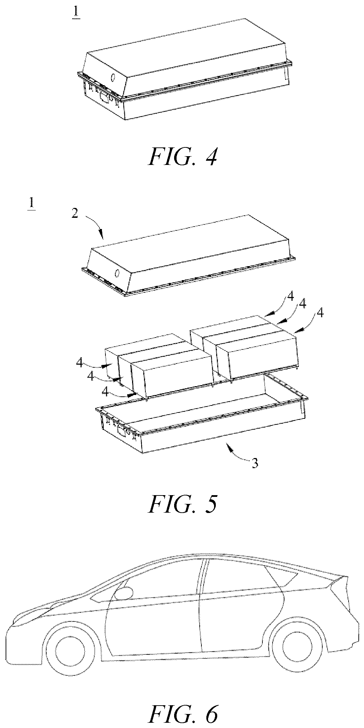

Figs. 4 and 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, where the upper box body 2 may cover the lower box body 3 to form a closed space for accommodating the battery modules 4. The plurality of the battery modules 4 may be arranged in the battery box in any manner.

In addition, the present application further provides a power consuming device, including the secondary battery provided in the present application. The secondary battery may be used as a power supply of the power consuming device, or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

For the power consuming device, the secondary battery can be selected according to the usage requirements thereof.

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a battery cell used as a power source.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products. Unless otherwise specified, the mass of substances used in the section of Examples is based on the mass not containing crystal water.

### Example 1

### Preparation of secondary battery

### 1. Preparation of positive electrode plate

A first conductive carbon black (Super P), a second conductive carbon black (Ketjen black), and a first dispersant (PVDF 5130) at a mass ratio of 3 : 1 : 3 were dry mixed, and the mixture was dispersed in a stirring tank at a line speed of 10 m/s for 15 min; where the specific surface area (SSA, i.e., S1) of the first conductive carbon black was equal to 60 m²/g, the specific surface area (SSA, i.e., S2) of the second conductive carbon black was equal to 600 m²/g, and S2/S1 = 10;
the resulting product was added into a solvent of NMP, and dispersed at a line speed of 15 m/s for 30 min to obtain a slurry 1 with a solid content of 10.5%;
a second dispersant (a copolymer of ethylene and maleic anhydride, Mn = 100,000) was added into the slurry 1, and then dispersed at a line speed of 15 m/s for 15 min to obtain a slurry 2, where the first conductive carbon black + the second conductive carbon black, and the second dispersant at a mass ratio of 10 : 1 were mixed; and
a positive active material of LiNi_{0.8}Co_{0.1}Mn_{0.1}O₂ (NCM811) was added into the mixture for further mixing to obtain a positive electrode active slurry, where a mass percentage of the positive electrode active material was 96.3% based on the weight of the dried positive electrode film layer.

The positive electrode active slurry was coated onto a positive electrode current collector of an aluminum foil, followed by procedures such as drying, cold pressing, slitting, and cutting to obtain the positive electrode plate. The positive electrode plate has a surface density of 300 mg/mm², and a compacted density of 3.3 g/cm³.

### 2. Preparation of negative electrode plate

A negative electrode active material of artificial graphite, a conductive agent of carbon black (Super P), a binder of a butadiene styrene rubber (SBR), and sodium carboxymethyl cellulose (CMC) were fully mixed at a mass ratio of 96 : 1 : 1.5 : 1.5 in an appropriate amount of a solvent of deionized water to form a negative electrode slurry; and the negative electrode slurry was coated onto a negative electrode current collector of a copper foil, followed by procedures such as drying, cold pressing, slitting, and cutting to obtain the negative electrode plate. The negative electrode plate has a surface density of 185 mg/mm², and a compacted density of 1.6 g/cm³.

### 3. Preparation of electrolyte solution

Ethylene carbonate (EC) and ethyl methyl carbonate (EMC) were mixed at a mass ratio of 30 : 70 to obtain an organic solvent, and then fully dried LiPF₆ was dissolved in the organic solvent to prepare an electrolyte solution at a concentration of 1 mol/L.

### 4. Separator

A porous polymeric thin film made of polyethylene (PE) with a thickness of 13 µm was used as the separator.

### 5. Preparation of secondary battery

The positive electrode plate, the separator, and the negative electrode plate were stacked in sequence and wound to obtain an electrode assembly; the electrode assembly was transferred into an outer package, and dried, and then the electrolyte solution was injected, followed by procedures such as vacuum encapsulation, standing, forming, and shaping, to obtain a secondary battery with a group margin of 89%.

### Examples 2-16

The method for preparing a secondary battery was similar to that in Example 1, except that the conductive agent in the positive electrode slurry was changed and carbon nanotubes (CNTs) were optionally added, specifically as shown in Table 1.

### Comparative Example 1

The method for preparing a secondary battery was similar to that in Example 1, except that merely the first conductive carbon black was used during the preparation of the positive electrode slurry.

### Comparative Example 2

The method for preparing a secondary battery was similar to that in Example 1, except that merely the second conductive carbon black was used during the preparation of the positive electrode slurry.

### Measurement methods for related parameters

### 1. Measurement of specific surface area

The specific surface area was tested using Tri-Star 3020 specific surface area and pore size analyzer of Micrometrics Instruments Corporation in accordance with the specific surface area analysis and test method by nitrogen adsorption with reference to GB/T 19587-2017, and was calculated using the BET (Brunauer Emmett Teller) method to obtain the specific surface area of a material. The test results are detailed in Table 1.

### 2. DCR testing at 25°C

At 25°C, each of the batteries was charged to 4.25 V at a constant current of 0.5 C, and then charged at a constant voltage to a current of 0.05 C. Then, the battery was discharged at a constant current of 0.5 C for 30 min, to adjust the battery to 50% SOC (State of Charge), and the voltage of the battery at this moment was denoted as U1. Then, the battery was discharged at a constant current of 4 C for 30 sec, point sampling of 0.1 sec was performed, and the voltage at the end of the discharge was denoted as U2. The discharge DCR at 50% SOC of the battery was used to represent the initial DCR of the battery, and the initial DCR of the battery = (U1 - U2)/4C.

### 3. Test for cycling performance at 25°C

At 25°C, each of the secondary batteries prepared in the examples and the comparative examples was charged to a cut-off voltage of 4.25 V at a constant current rate of 1 C, then charged to a current of ≤ 0.05 C at a constant voltage, left to stand for 5 min, then discharged to a discharge cut-off voltage of 2.8 V at a constant current rate of 0.33 C, and left to stand for 5 min, which was one charge and discharge cycle. The battery was repeatedly charged and discharged following this method until the battery capacity was attenuated to 80%. The number of cycles at this moment was denoted as the cycle life of the battery at 25°C.

**Table 1 Experimental conditions and results of Examples 1-16 and Comparative Examples 1-2**

| Examples | Conductive agent type | Mass percentage of CNT in positive electrode film layer | Mass percentage of conductive agent in positive electrode film layer | First conductive carbon black: second conductive carbon black (mass ratio) | Specific surface area S1 of first conductive carbon black (m²/g) | Specific surface area S2 of second conductive carbon black (m²/g) | S2/S1 |
|---|---|---|---|---|---|---|---|
| 1 | First conductive carbon black + second conductive carbon black | / | 2.00% | 3 : 1 | 60 | 600 | 10.00 |
| 2 | First conductive carbon black + second conductive carbon black | / | 2.00% | 3 : 1 | 60 | 400 | 6.67 |
| 3 | First conductive carbon black + second conductive carbon black | / | 2.00% | 3 : 1 | 60 | 300 | 5.00 |
| 4 | First conductive carbon black + second conductive carbon black | / | 2.00% | 3 : 1 | 60 | 800 | 13.33 |
| 5 | First conductive carbon black + second conductive carbon black | / | 2.00% | 3 : 1 | 60 | 1000 | 16.67 |
| 6 | First conductive carbon black + second conductive carbon black | / | 2.00% | 3 : 1 | 120 | 600 | 5.00 |
| 8 | First conductive carbon black + second conductive carbon black | / | 2.00% | 0.5 : 1 | 60 | 600 | 10.00 |
| 9 | First conductive carbon black + second conductive carbon black | / | 2.00% | 1 : 1 | 60 | 600 | 10.00 |
| 10 | First conductive carbon black + second conductive carbon black | / | 2.00% | 4 : 1 | 60 | 600 | 10.00 |
| 11 | First conductive carbon black + second conductive carbon black | / | 2.00% | 5 : 1 | 60 | 600 | 10.00 |
| 12 | First conductive carbon black + second conductive carbon black | / | 2.00% | 6 : 1 | 60 | 600 | 10.00 |
| 13 | First conductive carbon black + second conductive carbon black + multiwalled CNT (tube diameter: 4-10 nm, tube length: 0.4-31 µm) | 0.10% | 1.20% | 3 : 1 | 60 | 600 | 10.00 |
| 14 | First conductive carbon black + second conductive carbon black + multiwalled CNT (tube diameter: 4-10 nm, tube length: 0.4-32 µm) | 0.20% | 1.20% | 3 : 1 | 60 | 600 | 10.00 |
| 15 | First conductive carbon black + second conductive carbon black + multiwalled CNT (tube diameter: 4-10 nm, tube length: 0.4-33 µm) | 0.50% | 1.20% | 3 : 1 | 60 | 600 | 10.00 |
| 16 | First conductive carbon black + second conductive carbon black + multiwalled CNT (tube diameter: 4-10 nm, tube length: 0.4-34 µm) | 1% | 1.20% | 3 : 1 | 60 | 600 | 10.00 |
| Comparative Example 1 | First conductive carbon black | / | 2.00% | / | 60 | / | / |
| Comparative Example 2 | Second conductive carbon black | / | 2.00% | / | / | 600 | / |

**Table 2 Electrical performance of secondary batteries prepared in Examples 1-16 and Comparative Examples 1-2**

| Examples | DCR/mΩ | Cycle life/cycle at 25°C |
|---|---|---|
| 1 | 1.77 | 2292 |
| 2 | 1.87 | 2175 |
| 3 | 2.00 | 1929 |
| 4 | 1.79 | 2244 |
| 5 | 2.37 | 1221 |
| 6 | 1.79 | 2247 |
| 8 | 1.94 | 2046 |
| 9 | 1.81 | 2211 |
| 10 | 1.84 | 2193 |
| 11 | 1.88 | 2172 |
| 12 | 2.15 | 1617 |
| 13 | 1.84 | 2232 |
| 14 | 1.77 | 2292 |
| 15 | 1.77 | 2259 |
| 16 | 1.78 | 2307 |
| Comparative Example 1 | 2.26 | 1455 |
| Comparative Example 2 | 2.52 | 1053 |

As can be seen from Table 1 and Table 2, the two conductive carbon blacks of the present application can be used to achieve outstanding conductivity and improved battery cycling performance without increasing the amount of the conductive agent.

It should be noted that the present application is not limited to the above embodiments. The above embodiments are exemplary only, and any embodiment that has substantially the same constitutions as the technical ideas and has the same effects within the scope of the technical solution of the present application is encompassed within the technical scope of the present application. In addition, without departing from the scope of the subject matter of the present application, various modifications that are conceivable to those skilled in the art and are applied to the embodiments and, and other modes constructed by combining some of the constituent elements of the embodiments are also encompassed within the scope of the present application.

## Claims

1. A secondary battery, comprising a positive electrode plate, wherein the positive electrode plate comprising a positive electrode current collector and a positive electrode film layer arranged on at least one surface of the positive electrode current collector, the positive electrode film layer comprising a conductive agent, wherein the conductive agent comprises a first conductive carbon black and a second conductive carbon black, and a specific surface area of the second conductive carbon black is greater than a specific surface area of the first conductive carbon black.

2. The secondary battery according to claim 1, wherein the specific surface area of the first conductive carbon black is denoted as S1, the specific surface area of the second conductive carbon black is denoted as S2, S2/S1 ≥ 4, and optionally, 5 ≤ S2/S1 ≤ 17.

3. The secondary battery according to claim 1 or 2, wherein
the specific surface area of the first conductive carbon black is ≤ 140 m²/g, and optionally 50 m²/g-130 m²/g; and/or
the specific surface area of the second conductive carbon black is 200 m²/g-1,200 m²/g, and optionally 300 m²/g-1,000 m²/g.

4. The secondary battery according to any one of claims 1 to 3, wherein the conductive agent satisfies at least one of (1) to (4):
(1) a mass percentage of the conductive agent in the positive electrode film layer is ≤ 5%, and optionally 0.8%-3.0%;
(2) a mass percentage of the first conductive carbon black in the positive electrode film layer is ≤ 4.2%, and is optionally 0.4%-3%;
(3) a mass percentage of the second conductive carbon black in the positive electrode film layer is ≤ 2.5%, and optionally 0.1% -2%; and
(4) a mass ratio of the first conductive carbon black to the second conductive carbon black is (0.4-8) : 1, and optionally (0.5-7) : 1.

5. The secondary battery according to claims 1 to 4, wherein the first conductive carbon black has an oil absorption number of ≤ 260; and/or the second conductive carbon black has an oil absorption number of ≤ 300.

6. The secondary battery according to any one of claims 1 to 5, wherein the first conductive carbon black has a moisture content of ≤ 5,000 ppm; and/or the second conductive carbon black has a moisture content of ≤ 10,000 ppm.

7. The secondary battery according to any one of claims 1 to 6, wherein the conductive agent further comprises carbon nanotubes;
optionally, the carbon nanotubes have a tube diameter of 4-10 nm;
optionally, the carbon nanotubes have a tube length of 0.3-50 µm;
optionally, the carbon nanotubes have an aspect ratio of 50-12,500;
optionally, the carbon nanotubes comprise multiwalled carbon nanotubes;
optionally, a mass percentage of the carbon nanotubes in the positive electrode film layer is ≤ 1.2%; and
optionally, a mass ratio of the second conductive carbon black to the carbon nanotubes is (0.1-10) : 1.

8. The secondary battery according to any one of claims 1 to 7, wherein the first conductive carbon black and the second conductive carbon black are each independently selected from at least one of furnace black, acetylene black, and Ketjen black.

9. A method for preparing a secondary battery, comprising preparing a positive electrode plate by the steps of:
S1: dry mixing a first conductive carbon, a second conductive carbon, and a first dispersant in a stirring tank to obtain a mixture powder, wherein the second conductive carbon black has a specific surface area greater than that of the first conductive carbon black;
S2: adding a solvent into the mixture powder, and uniformly mixing same to obtain a slurry 1;
S3: adding a second dispersant into the slurry 1, and uniformly mixing same to obtain a slurry 2;
S4: adding a positive electrode active material into the slurry 2, and uniformly mixing same to obtain a positive electrode material slurry; and
S5: coating the positive electrode material slurry on at least one surface of a positive electrode current collector, and drying same to form a positive electrode film layer.

10. The preparation method according to claim 9, wherein the first dispersant comprises a vinylidene fluoride-based polymer; and
optionally, the first dispersant comprises a vinylidene fluoride homopolymer or a first dispersant compound obtained from vinylidene fluoride and an active group-containing vinylidene fluoride copolymer, wherein the active group comprises at least one of carboxyl, epoxy, hydroxy, or sulfonyl, and optionally carboxyl or epoxy.

11. The preparation method according to either one of claim 9 or 10, wherein the second dispersant is selected from a copolymer of ethylene and maleic anhydride or a copolymer of styrene and maleic anhydride.

12. The preparation method according to any one of claims 9 to 11, wherein a ratio of the sum of a mass of the first conductive carbon black and a mass of the second conductive carbon black to a mass of the first dispersant is (0.4-2.0) : 1, and is optionally (0.75-1.8) : 1.

13. The preparation method according to any one of claims 9 to 12, wherein a ratio of the sum of the mass of the first conductive carbon black and the mass of the second conductive carbon black to a mass of the second dispersant is (8-30) : 1, and is optionally (9-25) : 1.

14. The preparation method according to any one of claims 9 to 13, wherein in step S3, the second dispersant and carbon nanotubes are added into the slurry 1, and uniformly mixed to obtain the slurry 2.

15. The preparation method according to claim 14, wherein a content a of the first conductive carbon black, a content b of the second conductive carbon black, and a content c of the carbon nanotubes satisfy: 0.2 ≤ ((a + b) × c)/(a × b) ≤ 10, and optionally 0.4 ≤ ((a + b) × c)/(a × b) ≤ 6, wherein the a, b, and c are based on a total dry weight of the conductive slurry, respectively.

16. A power consuming device, comprising a secondary battery according to any one of claims 1 to 8 or a secondary battery prepared by the method according to any one of claims 9 to 15.
